# EUROPEAN PATENT SPECIFICATION

(11) **EP 2 589 483 B1**
(45) Date of publication and mention of the grant of the patent: **09.07.2014**
(21) Application number: 11400051.6
(22) Date of filing: 02.11.2011
(51) Int. Cl.: B29C 70/00, F41H 5/04

(54) **Shock and impact resistant multilayered composite and method for its fabrication**
Schock- und stossfester mehrschichtiger Verbundköper und dessen Herstellungsverfahren
Composite multi-couches résistant aux chocs et aux impacts ainsi que méthode pour sa fabrication

(43) Date of publication of application: 08.05.2013
(73) Proprietor: AIRBUS HELICOPTERS DEUTSCHLAND GmbH, 86609 Donauwörth (DE)
(72) Inventor: Hebensperger, Michael, 81677 München (DE); Kreitmair-Steck, Wolfgang, 85521 Ottobrunn (DE)
(74) Representative: GPI & Associés

(56) References cited:
- EP-A2- 1 980 813
- WO-A1-98/15796
- WO-A1-99/50612
- WO-A2-03/089869
- WO-A2-2007/058665
- WO-A2-2008/036066
- US-A- 3 431 818
- US-A- 4 868 040
- US-A1- 2003 167 910
- US-A1- 2009 114 083

## Description

The present invention relates to a shock and impact resistant multilayered composite as armour against high velocity projectiles with the features of claim 1 and to a method for fabrication of such an impact resistant multilayered composite with the features of claim 12.

Certain types of armour for protecting various structures and machines have been constructed from monolithic ceramic materials. These materials offer advantages in that they can be extremely hard and light weight. The extreme hardness of ceramic armour has advantages in that incoming projectiles can be shattered on impact.

Typically, ceramic armour is made up of numerous, flat monolithic ceramic plates or tiles which are sometimes arranged end to end and attached to the surface which is to be protected, such as for example, on the bottom of an airplane or helicopter to protect these aircraft from ground fire.

Although, armour constructed of monolithic ceramic plates has advantages as described above, it tends to be brittle. Typically, the impact of just one projectile will shatter an entire plate of the monolithic ceramic armour, even those unimpacted areas of the plate adjacent the impact site. Thus, a large area of the plate is rendered ineffective against subsequent projectiles. In addition, the nature of monolithic ceramic materials and their associated forming methods precludes forming complex shapes or large pieces. Essentially, ceramic armour must be constructed from the aforementioned flat ceramic plates. In the case where ceramic armour is employed on an aircraft, ground vehicle, etc., there can be installation problems associated with attaching numerous flat ceramic plates to a surface that may be curved. In addition, having these numerous small plates attached to the outside of an aircraft can increase the aerodynamic drag.

The document US 6203908 B1 discloses a composite armour for absorbing and dissipating kinetic energy from high velocity projectiles, comprising a panel provided with a layer of a plurality of high density ceramic bodies, each of the bodies being substantially cylindrical in shape. The bodies are arranged in a plurality of adjacent rows and columns, the major axis of the bodies being in substantially parallel orientation with each other and substantially perpendicular to an adjacent surface of the panel.

The document US 5847308 A discloses a passive armour system using armour stacks of ceramic tiles connected to layers of glass. The armour stacks are then adhered to the inside of a cover box. The cover box is then secured to a base and then covered with a cloth impregnated with an adhesive.

The document WO 03010484 A1 discloses a ceramic armour system including an integral ceramic plate, or a plurality of interconnected ceramic components providing an integral plate. The ceramic has a deflecting front surface or a flat front surface, and a rear surface. A front spall layer is bonded to the front surface of the ceramic plate. A shock-absorbing layer is bonded to the rear surface of ceramic plate. A backing is bonded to the exposed face of the shock-absorbing layer.

The document DE 19831725 C1 discloses an armour plate with a ceramic-carbon fibre composite fixed in a matrix. The composite includes additional carbon fibres which are longer than the short fibres in the main mix and are indiscriminately distributed through the matrix or in the form of a web.

The document US 5970843 A discloses an integrated, layered armour structure having multiple layers which alternate in their exhibited characteristics between extremely hard and ductile. The extremely hard layers of the armour structure are designed to shatter an impacting projectile, or pieces thereof, and to fracture in such a way as to dissipate at least a portion of the kinetic energy associated with the projectile pieces and to disperse the projectile pieces and hard layer fragments over a wide area. The ductile layers of the armour structure are designed to yield under the force of impinging projectile pieces and hard layer fragments from an adjacent hard layer. This yielding dissipates at least a portion of the remaining kinetic energy of these pieces and fragments. Pieces and fragments not possessing sufficient kinetic energy to tear through the ductile layer are trapped therein and so stopped.

The document US 4 868 040 A discloses a shock and impact resistant multilayered composite according to the preamble of appended claim 1.

It is an object of the present invention to provide a shock and impact resistant multilayered composite as passive armour with optimized absorption and dissipation of any kinematic energy of projectiles upon impact to facilitate stopping the resulting pieces of the projectile from passing completely through the armour and preventing the shattering of adjacent not impacted portions of the armour. It is another object of the present invention to provide a shock and impact resistant multilayered composite as armour with reduced weight that can be formed into practically any shape and size desired, so as to be made to conform to the shape of the structure or machine for improved protection. It is a further object of the present invention to provide a method for fabrication of such a shock and impact resistant multilayered composite.

The above-described objectives are realized with a shock and impact resistant multilayered composite with the features of claim 1 of the present invention and with a method for fabrication of such an impact resistant multilayered composite with the features of claim 12. Preferred embodiments of the invention are provided with the subclaims.

According to the invention a shock and impact resistant multilayered composite as armour against projectiles, particularly for aircrafts, ground- and/or water vehicles, comprises an outer shatter protection body, at least one active body along side the shatter protection, and at least one highly elastic and tearproof absorption/dissipation body along side the at least one active body. The outer shatter protection body is cured to said at least one active body and said at least one active body is cured to said at least one absorption/dissipation body. According to the invention each of the bodies, namely the outer shatter protection body, said at least one active body or said at least one absorption/dissipation body contribute individually to the improved ballistic protection of the composite. Said outer shatter protection body as an elastomer/fiber composite protects against any damages resulting from fragments of a projectile with high kinetic energy. Any diffusion and the amplitudes of a shock wave are attenuated and reduced in depth and laterally by the bodies to restrain areas of ground material. All of said bodies achieve by their summarized effects a passive armour with optimized absorption and dissipation of any kinematic energy of high velocity projectiles upon impact which allows to facilitate stopping any resulting pieces of the projectile from passing completely through the armour and preventing the shattering of adjacent not impacted portions of the armour. According to a further advantage of the present invention a shock and impact resistant multilayered composite as armour is provided with reduced weight that can be formed into practically any shape and size desired, so as to be made to conform to any shape of a structure or machine for improved protection. The reduced weight of the inventive shock and impact resistant multilayered composite has low influence on carrying capacity, manoeuvrability, cruising range and/or fuel consumption of any aircraft, ground- and/or water vehicle equipped with said inventive armour.

According to the invention the outer shatter protection body and said at least one absorption/dissipation body each comprise respectively at least one supporting tissue between elastomeric layers on either side. Said outer shatter protection body protects any adjacent ceramic material against any damages resulting from fragments of a projectile with high kinetic energy. The coverage of the supporting tissue by means of elastomeric layers protects the fibers of the supporting tissue from UV-rays and from humidity and thus said coverage allows protection of the material of the supporting tissue from deterioration. The compound structure defined by the at least one supporting tissue between elastomeric layers on either side safeguards the characteristics of the high modular fibers of the supporting tissue in said at least one absorption/dissipation body for a satisfying attenuation of a shock wave. The high modular fibers have an elasticity modulus > 100 GPa, are tearproof till > 2,5 GPa and have an elongation at break > 2.0%.

According to a preferred embodiment of the invention the at least one supporting tissue is made of high modular fibers with high tensile strength and good linear expansion, said fibers being thermoset liquid crystalline polyoxazole, aramide and/or high-modulus polyethylene (HMPE) or high-performance polyethylene (HPPE).

According to a further preferred embodiment of the invention the outer shatter protection body is coated with a hard plastic layer, such as a hard plastic layer made of ultra high-molecular polyethylene or polyurethane in order to protect the outer shatter protection body from corrosion, particularly if said outer shatter protection body is mounted to the outside of a vehicle.

According to a further preferred embodiment of the invention a metal tissue, such as a copper mesh, is integrated into the hard plastic layer to allow protection against lightning and providing electro-magnetic compatibility.

According to a further preferred embodiment of the invention the at least one active body as a ceramic/elastomer composite comprises at least two ceramic layers joined by means of an elastomeric body. The ceramic layers have the function to deform and/or to fragment the projectiles on impact to facilitate stopping said projectiles or their fragments. The elastomer or rubber allows high absorption of the shock wave due to its sonic speed of not more than 150 m/sec compared to more than 10.000 m/sec in ceramics. The ceramic composites have an elasticity modulus > 350 GPa, are tearproof till > 0.2 GPa, have a Vickers hardness > 20 GPA, a pressure resistance > 2.0 GPa and have a variable size between 1 mm - 20 mm.

According to a further preferred embodiment of the invention the ceramic layers of the at least one active body are made of the same or different materials, such as aluminium oxide, silicium carbide, silicium enriched silicium carbide, boron carbide, boron nitride, tungsten carbide or ceramic-fiber, carbide fiber or carbon nano tubes (CNT) reinforced ceramics. The fracture bridging effect of the fibers allows higher dynamic loads of the ceramics and reduces any lateral fracture extension.

According to a further preferred embodiment of the invention the ceramic layers of the at least one active body are of the same or different thicknesses, while in the case of different thicknesses preferably the layer with the biggest thickness and highest rigidity being the layer turned towards an impact and subsequent layers are having more and more decreasing thicknesses and/or rigidities.

According to a further preferred embodiment of the invention fiber tissues are provided with high elastic modulus, high tensile strength and high linear expansion between the ceramic layers, said fiber tissues being embedded in the elastomer layers.

According to a further preferred embodiment of the invention at least one thermosetting resin is applied to any of the at least one supporting tissue and/or the elastomeric layers, said at least two ceramic layers and/or elastomeric body, such thermosetting resins being epoxi-resin, polyester-resin, acrylate-resin, phenol-formaldehyde-resin and/or cyanate-ester-resin. The appliance of said thermosetting resin enhances adherence of the layers and adherence of the bodies of the inventive impact resistant multilayered composite.

According to a further preferred embodiment of the invention at least one layer of tissue material, such as carbon fiber, glass fiber, etc., and partly thermosetting synthetic resin are provided in the absorption/dissipation body to allow the necessary stability of the compound structure.

According to the invention a method for fabrication of an impact resistant multilayered composite comprises the steps of preparing an outer shatter protection body, at least one active body and at least one absorption/dissipation body, and hardening and/or curing said outer shatter protection body to said at least one active body and said at least one active body to said at least one absorption/dissipation body. The inventive method allows preparation of an outer shatter protection body, at least one active body and at least one absorption/dissipation body separately and respective hardening and/or curing of each of said bodies separately in an autoclave or hot press. Subsequent a thermosetting resin, such as epoxi-resin, polyester-resin, acrylate-resin, phenol-formaldehyde-resin and cyanate-ester-resin, is applied to any of the bodies that are joined to each other by means of a further heat treatment.

According to a preferred embodiment of the invention the fabrication of an armour from the inventive impact resistant multilayered composite is accomplished in one common process with the steps of providing a non-adherent, coated mould, charging the mould with layers according to the sequence of the outer shatter protection body, the at least one active body and the at least one absorptionldissipation body, closing the mould and hardening and simultaneously curing at temperatures between 90° C to 200° C said outer shatter protection body to said at least one active body and said at least one active body to said at least one absorption/dissipation body by applying pressure and temperature in a hot press. The common process allows simultaneous synthesis of all materials used with improved adherence for the inventive impact resistant multilayered composite.

According to a further preferred embodiment of the invention the fabrication of an armour from the inventive impact resistant multilayered composite is accomplished alternatively in one common process with the steps of providing a non-adherent, coated mould, charging the mould with layers according to the sequence of the outer shatter protection body, the at least one active body and the at least one absorption/dissipation body, and hardening and simultaneously curing said outer shatter protection body to said at least one active body and said at least one active body to said at least one absorption/dissipation body in the open or closed mould by applying temperatures above 110° C in an autoclave or hot air oven.

According to a further preferred embodiment of the invention the mould is coated with paraffin, silicone, surface-active agent and/or fluorinated hydrocarbon to avoid adherence.

The invention will be described with reference to preferred embodiments of the invention as presented in the following description with reference to the drawings. The drawings show in:
Fig. 1 a lateral view of a ceramic armour system according to the state of the art,
Fig. 2 a cross sectional view of an impact resistant multilayered composite according to the invention,
Fig. 3 a cross sectional view of a preferred embodiment of an impact resistant multilayered composite according to the invention,
Fig. 4 a cross sectional view of a further preferred embodiment of an impact resistant multilayered composite according to the invention,
Fig. 5 a cross sectional view of a still further preferred embodiment of an impact resistant multilayered composite according to the invention,
Fig. 6a a top view of a layer of ceramics tiles of a still further preferred embodiment of an impact resistant multilayered composite according to the invention, and
Fig. 6b a cross sectional view of a an curved arrangement of ceramics tiles of a still further preferred embodiment of an impact resistant multilayered composite according to the invention.

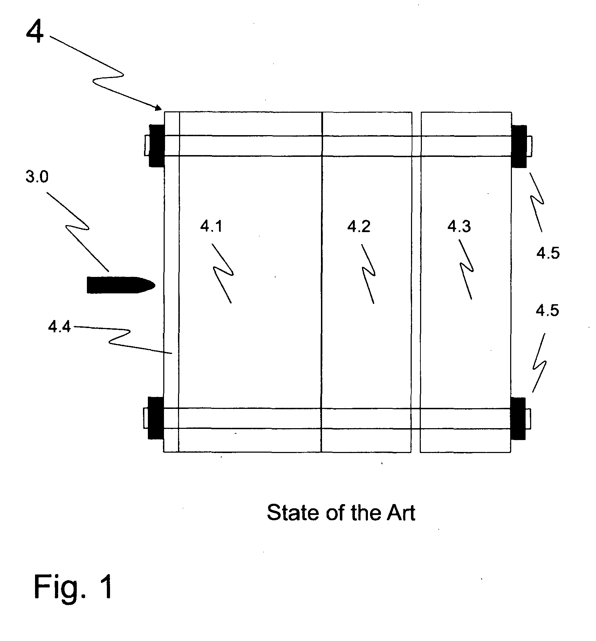

According to Fig. 1 a ceramic armour system 4 as ballistic protection against a projectile 3.0 comprises a cover layer 4.4 protecting against ceramic spall. The ceramic armour system 4 further comprises along side the cover layer 4.4 a ceramic body 4.1 adapted to deform and/or fragment the projectile 3.0 upon impact and for reduction of the speed of the projectile 3.0. Along side the ceramic body 4.1 is mounted an absorption/dissipation body 4.2 for reception of the ceramic spall, the ceramic powder and for the slowed down projectile 3.0 and/or the slowed down fragments of the projectile 3.0. The absorption/dissipation body 4.2 is mounted inside the ceramic body 4.1 and next to a support structure 4.3. The cover layer 4.4, the ceramic body 4.1, the absorption/dissipation body 4.2 and the support structure 4.3 are clamped against each other by parallel bolts 4.5 at lateral ends of the system 4.

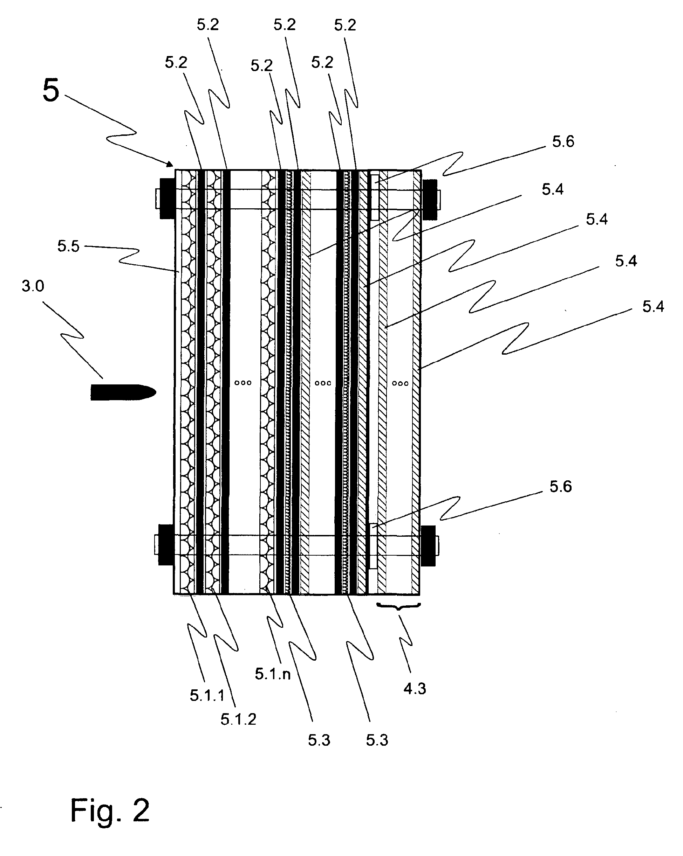

According to Fig. 2 an impact resistant multilayered composite 5 as ballistic protection against a projectile 3.0 comprises an outer shatter protection body 5.5 of one supporting tissue (not shown) between elastomeric layers (not shown) on either side. The supporting tissue is made of high modular fibers with high tensile strength and good linear expansion, said fibers being thermoset liquid crystalline polyoxazole, aramide and/or high-modulus polyethylene (HMPE) or high-performance polyethylene (HPPE).

The outer shatter protection body 5.5 is coated for reduction of drag, to provide a ground for painting and for protection against corrosion with a hard plastic layer (not shown) made of ultra high-molecular polyethylene or polyurethane and a metal tissue (not shown), such as a copper mesh, is embedded alongside the hard plastic layer, said metal tissue protecting against lightning and providing electro-magnetic compatibility for the impact resistant multilayered composite 5.

The impact resistant multilayered composite 5 further comprises along side and inside of the outer shatter protection body 5.5 a composite of a plurality of ceramic layers 5.1.1 to 5.1.n with elastomer layers 5.2 arranged between said ceramic layers 5.1.1 to 5.1.n. The ceramic layers 5.1.1 to 5.1.n are all made of the same material or are made of a suitable selection of different ceramic materials.

Subsequent and along side to the plurality of ceramic layers 5.1.1 to 5.1.n with elastomer layers 5.2 is mounted an absorption/dissipation body for the impact resistant multilayered composite 5. The absorption/dissipation body is composed of elastomer layers 5.2 and supporting tissues 5.3 made of high modular fibers with high tensile strength and good linear expansion and a layer of tissue material, such as carbon fiber, glass fiber, etc., and partly thermosetting synthetic resin 5.4.

A body of layers of tissue material and partly thermosetting synthetic resin 5.4, representing the structure to be protected against the high velocity projectiles 3.0, is arranged along side the absorption/dissipation body and separated by spacers 5.6 from the absorption/dissipation body. The body of layers of tissue material and partly thermosetting synthetic resin 5.4 is clamped to the impact resistant multilayered composite 5 by parallel bolts at lateral ends.

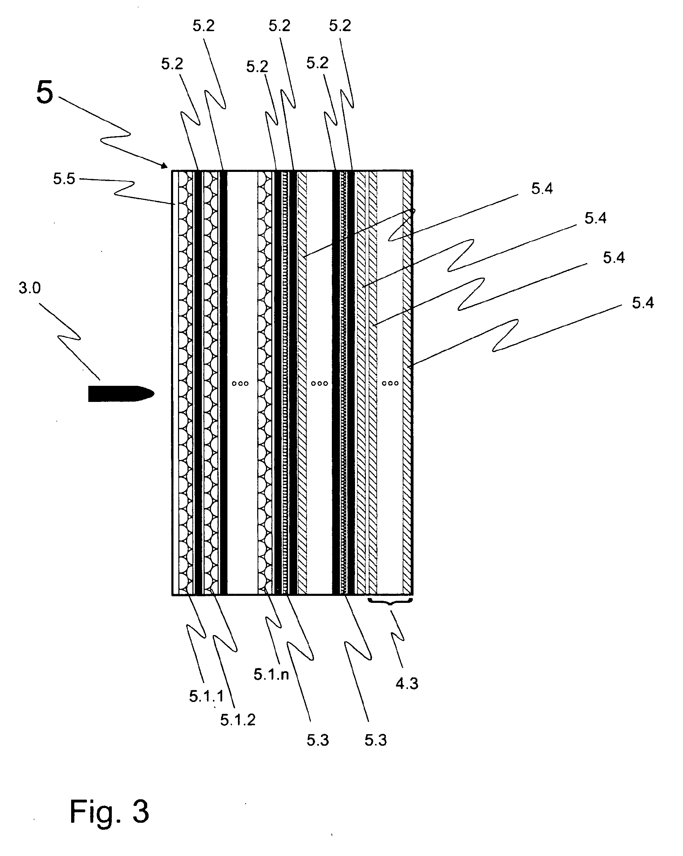

The impact resistant multilayered composite 5 according to Fig. 3 corresponds to the impact resistant multilayered composite 5 of Fig. 2 with the difference that the body of layers of tissue material and partly thermosetting synthetic resin 5.4 forms an overall composite with the impact resistant multilayered composite 5.

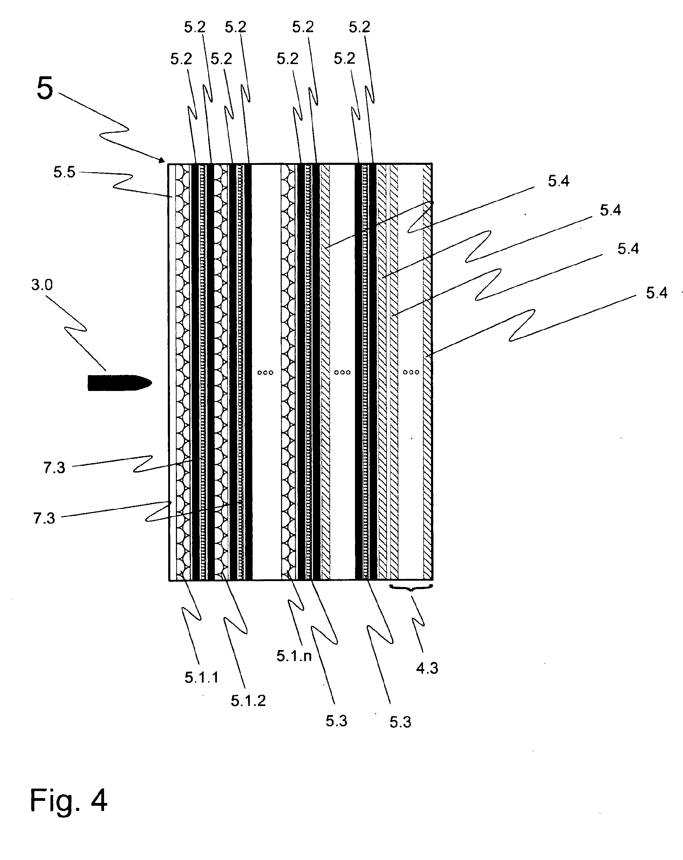

According to Fig. 4 the impact resistant multilayered composite 5 as ballistic protection against a projectile 3.0 comprises an outer shatter protection body 5.5 as defined in Fig. 2 followed inside by a plurality of aligned ceramic layers 5.1.1 to 5.1.n each respectively supported by elastomer layers 5.2 with embedded fiber tissues 7.3 with high elastic modulus, high tensile strength and high linear expansion; said elastomer layers 5.2 with embedded fiber tissues 7.3 being arranged between said ceramic layers 5.1.1 to 5.1.n.

Subsequent and along side to the plurality of ceramic layers 5.1.1 to 5.1.n supported by the elastomer layers 5.2 with the fiber tissues 7.3 follow the plurality of elastomer layers 5.2, supporting tissues 5.3 and a layer of tissue material and partly thermosetting synthetic resin 5.4 of the absorption/dissipation body for the impact resistant multilayered composite 5 mounted to the body of layers of tissue material and partly thermosetting synthetic resin 5.4, representing the structure to be protected against the high velocity projectiles 3.0.

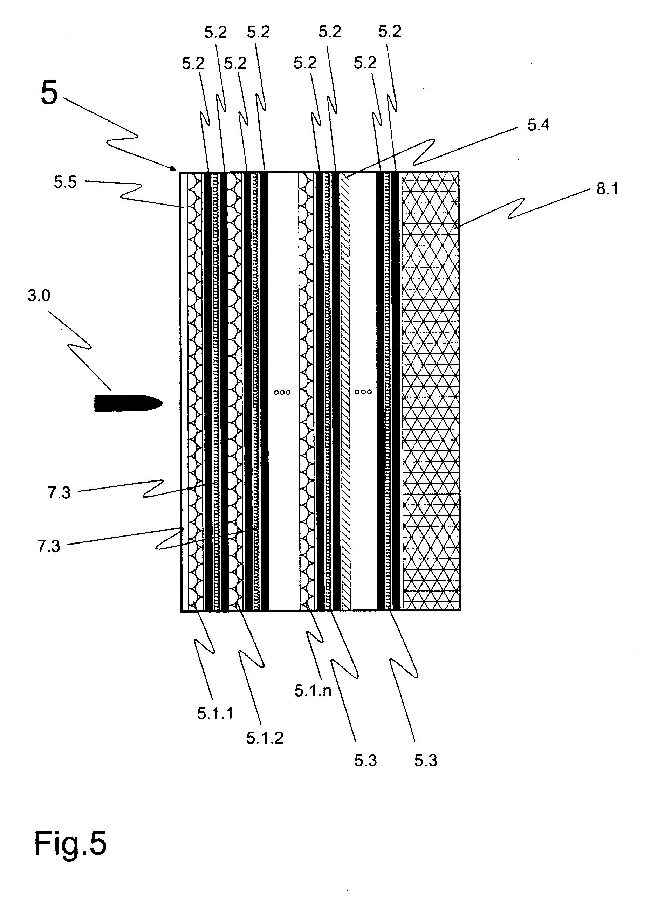

The impact resistant multilayered composite 5 according to Fig. 5 corresponds to the impact resistant multilayered composite 5 of Fig. 4 with the difference that the body to be armoured against the high velocity projectiles 3.0, is a non composite structure, such as a panel sheet 8.1, preferably a metal panel sheet 8.1.

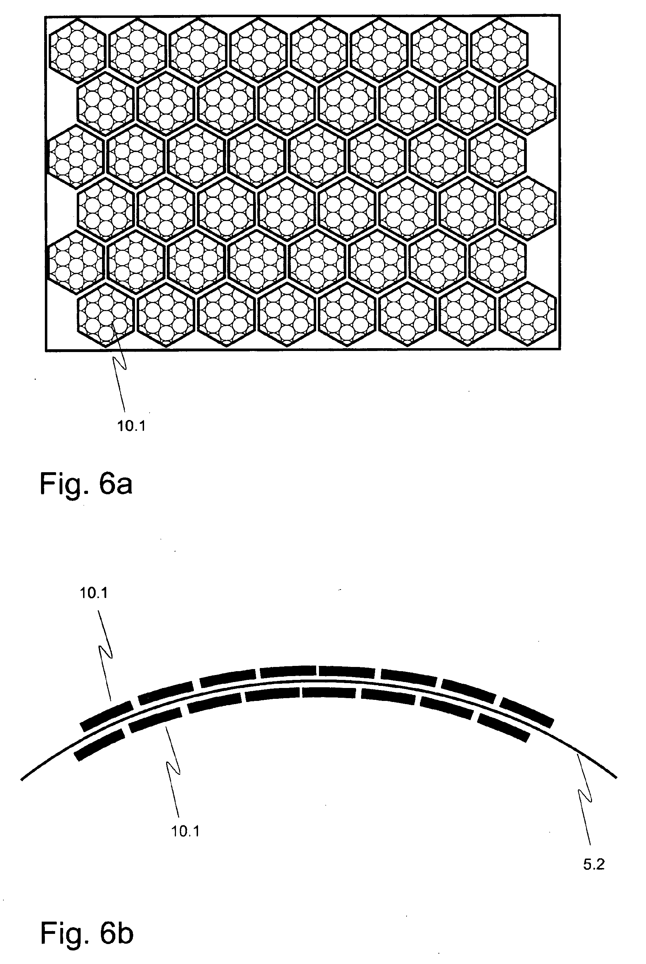

According to Fig. 6a the ceramics layers 5.1.1-5.1.n of the impact resistant multilayered composite 5 are each composed of equilateral hexagonal ceramics tiles 10.1 arranged alongside each other.

According to Fig. 6b the ceramics layers 5.1.1-5.1.n of the impact resistant multilayered composite 5 of equilateral hexagonal ceramics tiles 10.1 of Fig. 6a are arranged in a curved or double curved geometry with sufficiently big curvature radius.

A method for fabrication of an impact resistant multilayered composite 5 comprises in its most general way the steps of preparing an outer shatter protection body 5.5, at least one active body and at least one absorptionldissipation body. Said outer shatter protection body is hardened and/or cured to said at least one active body and said at least one active body is hardened and/or cured to said at least one absorption/dissipation body.

The impact resistant multilayered composite 5 is mounted to a structure 5.4, 8.1 to be protected against high velocity projectiles 3.

Preferably the method for fabrication of an impact resistant multilayered composite 5 comprises providing a non-adherent, coated mould by coating the mould with paraffin, silicone, surface-active agent and/or fluorinated hydrocarbon. The non-adherent, coated mould is charged with ceramic layers 5.1.1 to 5.1.n, with elastomer layers 5.2, supporting tissues 5.3, layers of tissue material and partly thermosetting synthetic resin 5.4 and/or elastomer layers 5.2 with embedded fiber tissues 7.3 according to the sequence defined by the outer shatter protection body, the at least one active body and the at least one absorption/dissipation body. The mould is closed and said outer shatter protection body is hardened and simultaneously cured to said at least one active body and said at least one active body is hardened and simultaneously cured to said at least one absorption/dissipation body by applying pressure and temperatures in a range of 90° C to 200° C in a hot press (not shown).

Alternatively the preferred method for fabrication of an impact resistant multilayered composite 5 comprises providing the non-adherent, coated mould, charging the non-adherent, coated mould is charged with the ceramic layers 5.1.1 to 5.1.n, the elastomer layers 5.2, supporting tissues 5.3, layers of tissue material and partly thermosetting synthetic resin 5.4 and/or elastomer layers 5.2 with embedded fiber tissues 7.3 according to the sequence defined by the outer shatter protection body, the at least one active body and the at least one absorption/dissipation body. The outer shatter protection body is hardened and simultaneously cured to said at least one active body and said at least one active body is hardened and simultaneously cured to said at least one absorption/dissipation body in the opened or closed mould at temperatures above 110° C in an autoclave or a hot air oven (not shown).

## Claims

1. A shock and impact resistant multilayered composite (5) comprising an outer shatter protection body (5.5), and at least one active body (5.1.1, 5.2) along side the outer shatter protection body (5.5), at least one highly elastic and tearproof absorption/dissipation body (5.2, 5.3) being provided along side the at least one active body (5.1.1, 5.2), said outer shatter protection body (5.5) being cured to said at least one active body (5.1.1 to 5.1.n, 5.2) and said at least one active body (5.1.1 to 5.1.n, 5.2) being cured to said at least one absorption/dissipation body (5.2, 5.3)
**characterised in that** :
the outer shatter protection body (5.5) comprises at least one supporting tissue between elastomeric layers on either side,
the at least one active body comprises at least two ceramic layers (5.1.1 to 5.1.n) joined by means of an elastomeric body, with elastomer layers (5.2) arranged between said ceramic layers (5.1.1 to 5.1.n),
the absorption/dissipation body (5.2, 5.3) comprises at least one supporting tissue (5.3) made of high modular fibers between elastomeric layers on either side.

2. The composite according to claim 1, **characterized in that** the at least one supporting tissue (5.3) is made of high modular fibers with high tensile strength and good linear expansion, said fibers being thermoset liquid crystalline polyoxazole, aramide and/or high-modulus polyethylene or high-performance polyethylene.

3. The composite according to claim 1, **characterized in that** the outer shatter protection body (5.5) is coated with a hard plastic layer, such as a hard plastic layer made of ultra high-molecular polyethylene or polyurethane.

4. The composite according to claim 3, **characterized in that** a metal tissue, such as a copper mesh, is integrated into the hard plastic layer.

5. The composite according to claim 1, **characterized in that** the ceramic layers (5.1.1 to 5.1.n) of the at least one active body are made of the same or different materials, such as aluminium oxide, silicium carbide, silicium enriched silicium carbide, boron carbide, boron nitride, tungsten carbide or ceramic-fiber or carbide fiber or carbon nano tubes reinforced ceramics.

6. The composite according to claim 1, **characterized in that** the ceramic layers (5.1.1 to 5.1.n) of the at least one active body (5.1.1 to 5.1.n, 5.2) are of the same thickness.

7. The composite according to claim 1, **characterized in that** the ceramic layers (5.1.1 to 5.1.n) of the at least one active body (5.1.1 to 5.1.n, 5.2) are different thicknesses, a layer with a biggest thickness and highest rigidity being a layer turned towards an impact and subsequent layers are having more and more decreasing thicknesses and/or rigidities.

8. The composite according to claim 1, **characterized in that** fiber tissues (7.3) with high elastic modulus, high tensile strength and high linear expansion are provided between the ceramic layers (5.1.1 to 5.1.n) said fiber tissues (7.3) being embedded in the elastomer layers (5.2).

9. The composite according to claim 1, **characterized in that** at least one thermosetting resin is applied to the at least one supporting tissue (5.3) and/or the elastomeric layers (5.2), said at least two ceramic layers (5.1.1 to 5.1.n) and/or elastomeric body, such thermosetting resins being epoxi-resin, polyester-resin, acrylate-resin, phenol-formaldehyde-resin and/or cyanate-ester-resin.

10. The composite according to claim 1, **characterized in that** the at least one layer of tissue material, such as carbon fiber, glass fiber, etc., and partly thermosetting synthetic resin are provided in the absorption/dissipation body (5.2, 5.3).

11. The composite according to claim 1, **characterized in that** each ceramics layer (5.1.1 to 5.1.n) is composed of a geometrical arrangement of ceramic tiles.

12. A method for fabrication of a shock and impact resistant multilayered composite according to any of the preceding claims, **characterized by**
preparing an outer shatter protection body (5.5), at least one active body (5.1.1 to 5.1.n, 5.2) and
at least one absorption/dissipation body (5.2, 5.3), and
hardening and/or curing said outer shatter protection body (5.5) to said at least one active body (5.1.1 to 5.n, 5.2) and said at least one active body (5.1.1 to 5.n, 5.2) to said at least one absorption/dissipation body (5.2, 5.3).

13. The method according to claim 12, **characterized by**
Providing a non-adherent, coated mould,
Charging the mould with layers according to the sequence of the outer shatter protection body (5.5), the at least one active body (5.1.1 to 5.n, 5.2) and the at least one absorption/dissipation body (5.2, 5.3),
Closing the mould and
Hardening and simultaneously curing said outer shatter protection body (5.5) to said at least one active body (5.1.1 to 5.n, 5.2) and said at least one active body (5.1.1 to 5.n, 5.2) to said at least one absorption/dissipation body (5.2, 5.3) by applying pressure and temperature in a hot press.

14. The method according to claim 12, **characterized by**
Providing a non-adherent, coated mould,
Charging the mould with layers according to the sequence of the outer shatter protection body (5.5), the at least one active body (5.1.1 to 5.n, 5.2) and the at least one absorption/dissipation body (5.2, 5.3), and
Hardening and simultaneously curing said outer shatter protection body (5.5) to said at least one active body (5.1.1 to 5.n, 5.2) and said at least one active body (5.1.1 to 5.n, 5.2) to said at least one absorption/dissipation body (5.2, 5.3) by applying temperatures above 110° C in an autoclave or hot air oven.

15. The method according to claim 12, **characterized by**
Coating the mould with paraffin, silicone, surface-active agent and/or fluorinated hydrocarbon.

## Patentansprüche

1. Schock- und stoßfester mehrschichtiger Verbundkörper (5) mit einem äußeren Splitterschutzkörper (5.5) und mindestens einem aktiven Körper (5.1.1., 5.2) Seite an Seite mit dem äußeren Splitterschutzkörper (5.5), mindestens einem hochelastischen und reißfesten Absorptions-/Dissipationskörper (5.2, 5.3), der Seite an Seite mit mindestens einem aktiven Körper (5.1.1, 5.2) angeordnet ist, wobei der äußere Splitterschutzkörper (5.5) an dem mindestens einen aktiven Körper (5.1.1 bis 5.1.n, 5.2) gehärtet ist, und der mindestens eine aktive Körper (5.1.1. bis 5.1.n, 5.2) an dem mindestens einen Absorptions-/Dissipationskörper (5.2, 5.3) gehärtet ist,
**dadurch gekennzeichnet, dass**
der äußere Splitterschutzkörper (5.5) mindestens ein Trägergewebe zwischen elastomeren Schichten auf jeder Seite aufweist,
der mindestens eine aktive Körper mindestens zwei Keramikschichten (5.1.1. bis 5.1.n) autweist, die durch einen elastomeren Körper verbunden sind, wobei elastomere Schichten (5.2) zwischen den keramischen Schichten (5.1.1 bis 5.1.n) angeordnet sind,
der Absorptions-/Dissipationskörper (5.2, 5.3) mindestens ein Trägergewebe (5.2) aus hochsteifen Fasern zwischen elastomeren Schichten auf beiden Seiten aufweist.

2. Verbundkörper nach Anspruch 1, **dadurch gekennzeichnet, dass** mindestens ein Trägergewebe (5.3) aus hochsteifen Fasern hoher Zugfestigkeit und einer guten Längenausdehnung hergestellt ist, wobei die Fasern duroplastische Flüssigkristall-Polyoxazol-Fasern, Aramidfasern und/oder Fasern aus hochsteifern Polyethylen oder Hochleistungspolyethylen sind.

3. Verbundkörper nach Anspruch 1, **dadurch gekennzeichnet, dass** der äußere Splitterschutzkörper (5.5) mit einer harten Plastikschicht, wie einer Hartplastikschicht aus ultrahochmolekularem Polyethylen oder Polyurethan, beschichtet ist.

4. Verbundkörper nach Anspruch 3, **dadurch gekennzeichnet, dass** ein Metallgewebe, wie ein Kupfergewebe, in die Hartplastikschicht integriert ist.

5. Verbundkörper nach Anspruch 1, **dadurch gekennzeichnet, dass** die Keramikschichten (5.1.1 bis 5.1.n) des mindestens einen aktiven Körpers aus demselben oder unterschiedlichen Materialien hergestellt sind, wie Aluminiumoxid, Siliciumcarbid, mit Silicium angereichertem Siliciumcarbid, Borcarbid, Bornitrid, Wolframcarbid oder Keramikfaser oder Carbidfaser oder mit Kohlenstoffnanoröhren verstärkte Keramik.

6. Verbundkörper nach Anspruch 1, **dadurch gekennzeichnet, dass** die Keramikschichten (5.1.1 bis 5.1.n) des mindestens einen aktiven Körpers (5.1.1 bis 5.1.n, 5.2) die gleiche Dicke aufweisen.

7. Verbundkörper nach Anspruch 1, **dadurch gekennzeichnet, dass** die keramischen Schichten (5.1.1 bis 5.1.n) des mindestens einen aktiven Körpers (5.1.1. bis 5. 1.n, 5.2) unterschiedliche Dicken aufweisen, wobei eine Schicht mit der größten Dicke und der höchsten Steifigkeit eine Schicht ist, die stoßseitig angeordnet ist, und wobei folgende Schichten nach und nach abnehmende Dicken und/oder Steifigkeiten aufweisen.

8. Verbundkörper nach Anspruch 1, **dadurch gekennzeichnet, dass** Fasergewebe (7.3) mit einem hohen Elastizitätsmodul, hoher Reißfestigkeit, und hoher linearer Ausdehnung zwischen den keramischen Schichten (5.1.1. bis 5. 1.n) angeordnet sind, wobei die Fasergewebe (7.3) zwischen den elastomeren Schichten (5.2) eingebettet sind.

9. Verbundkörper nach Anspruch 1, **dadurch gekennzeichnet, dass** mindestens ein duroplastisches Harz auf dem mindestens einen Trägergewebe (5.3) und/oder auf den elastomeren Schichten (5.2), den mindestens zwei keramischen Schichten (5.1.1 bis 5.1.n) und/oder dem elastomeren Körper aufgebracht ist, wobei solche duroplastischen Harze Epoxyharz, Polyesterharz, Acrylatharz, Phenol-Formaldehydharz und/oder Cyanatester-Harz sind.

10. Verbundkörper nach Anspruch 1, **dadurch gekennzeichnet, dass** die mindestens eine Schicht aus Gewebematerial, wie Carbonfaser, Glasfaser, etc., und teilweise duroplastisches Kunstharz in dem Absorptions-/Dissipationskörper (5.2, 5.3) vorgesehen sind.

11. Verbundkörper nach Anspruch 1, **dadurch gekennzeichnet, dass** jede Keramikschicht (5.1.1 bis 5.1.n) aus einer geometrischen Anordnung von Keramikplatten zusammengesetzt ist.

12. Verfahren zur Herstellung eines schock- und stoßfesten mehrschichtigen Verbundkörpers nach einem der vorstehende Ansprüche, **gekennzeichnet durch**
Vorbereiten eines äußeren Splitterschutzkörpers (5.5.), mindestens eines aktiven Körpers (5.1.1. bis 5.1.n, 5.2) und mindestens eines Absorptions-/Dissipationskörpers (5.2, 5.3) und
Härten und/oder Vulkanisieren des äußeren Splitterschutzkörpers (5.5) an dem mindestens einen aktiven Körper (5.1.1 bis 5.n, 5.2), und des mindestens einen aktiven Körpers (5.1.1 bis 5.n, 5.2) an dem mindestens einen Absorptions-/Dissipationskörper (5.2, 5.3).

13. Verfahren nach Anspruch 12, **gekennzeichnet durch**
Vorsehen einer antihaftbeschichteten Form,
Beladen der Form mit Schichten in der Reihenfolge äußerer Splitterschutzkörper (5.5), der mindestens eine aktive Körper (5.1.1 bis 5.n, 5.2) und der mindestens eine Absorptions-/Dissipationskörper (5.2, 5.3),
Schließen der Form und
Aushärten und gleichzeitiges Vulkanisieren des äußeren Splitterschutzkörpers (5.5.) an dem mindestens einen aktiven Körper (5.1.1 bis 5.n, 5.2), und des mindestens einen aktiven Körpers (5.1.1 bis 5.n, 5.2) an dem mindestens einen Absorptions-/Dissipationskörper (5.2, 5.3) **durch** Anlegen von Druck und Temperatur in einer Heißpresse.

14. Verfahren nach Anspruch 12, **gekennzeichnet durch**
Vorsehen einer antihaftbeschichteten Form,
Beladen der Form mit Schichten in der Reihenfolge äußerer Splitterschutzkörper (5.5), der mindestens eine aktive Körper (5.1.1 bis 5.n, 5.2) und der mindestens eine Absorptions-/Dissipationskörper (5.2, 5.3), und
Aushärten und gleichzeitiges Vulkanisieren des äußeren Splitterschutzkörpers (5.5.) an dem mindestens einen aktiven Körper (5.1.1 bis 5.n, 5.2), und des mindestens einen aktiven Körpers (5.1.1 bis 5.n, 5.2) an dem mindestens einen Absorptions-/Dissipationskörper (5.2, 5.3) **durch** Anlegen von Temperaturen oberhalb von 110°C in einem Autoclaven oder in einem Heißluftofen.

15. Verfahren nach Anspruch 12, **gekennzeichnet durch**
Beschichten der Form mit Paraffin, Silicon, einem oberflächenaktiven Stoff und/oder fluoriertem Kohlenwasserstoff.

## Revendications

1. Composite multicouche résistant aux chocs et aux impacts (5) comprenant un corps de protection contre les éclats externes (5.5), et au moins un corps actif (5.1.1, 5.2) à côté du corps de protection contre les éclats externes (5.5), au moins un corps d'absorption/dissipation hautement élastique et indéchirable (5.2, 5.3) étant fourni à côté de l'au moins un corps actif (5.1.1, 5.2), ledit corps de protection contre les éclats externes (5.5) étant pris sur ledit au moins un corps actif (5.1.1 à 5.1.n, 5.2) et ledit au moins un corps actif (5.1.1 à 5.1.n, 5.2) étant pris sur l'au moins un corps d'absorption/dissipation (5.2, 5.3),
**caractérisé en ce que** :
le corps de protection contre les éclats externes (5.5) comprend au moins un tissu de support entre des couches élastomères sur chaque côté,
d'au moins un corps actif comprend au moins deux couches céramiques (5.1.1 à à 5.1.n) reliées au moyen d'un corps élastomère, avec des couches élastomères (5.2) disposées entre lesdites couches céramiques (5.1.1 à 5.1.n),
le corps d'absorption/dissipation (5.2, 5.3) comprend au moins un tissu de support (5.3) constitué de fibres hautement modulaires entre des couches élastomères sur chaque côté.

2. Composite selon la revendication 1, **caractérisé en ce que** l'au moins un tissu de support (5.3) est constitué de fibres hautement modulaires avec une résistance à la traction élevée et une bonne dilatation linéaire, lesdites fibres étant du polyoxazole à cristaux liquides, de l'aramide et/ou du polyéthylène à haut module d'élasticité ou du polyéthylène haute performance thermodurcis.

3. Composite selon la revendication 1, **caractérisé en ce que** le corps de protection contre les éclats externes (5.5) est recouvert d'une couche plastique dure, telle qu'une couche plastique dure constituée de polyéthylène à ultrahaut poids moléculaire ou de polyuréthane.

4. Composite selon la revendication 3, **caractérisé en ce qu'**un tissu métallique, tel qu'un treillis de cuivre, est intégré dans la couche plastique dure.

5. Composite selon la revendication 1, **caractérisé en ce que** les couches céramiques (5.1.1 à 5.1.n) de l'au moins un corps actif sont constituées de matériaux identiques ou différents, tels que l'oxyde d'aluminium, le carbure de silicium, le carbure de silicium enrichi en silicium, le carbure de bore, le nitrure de bore, le carbure de tungstène ou une céramique renforcée aux fibres céramiques ou aux fibres de carbure ou aux nanotubes de carbone.

6. Composite selon la revendication 1, **caractérisé en ce que** les couches céramiques (5.1.1 à 5.1.n) de l'au moins un corps actif (5.1.1 à 5.1.n, 5.2) sont de la même épaisseur.

7. Composite selon la revendication 1, **caractérisé en ce que** les couches céramiques (5.1.1 à 5.1.n) de l'au moins un corps actif (5.1.1 à 5.1.n, 5.2) ont des épaisseurs différentes, une couche avec l'épaisseur la plus grande et la rigidité la plus élevée étant une couche tournée vers un impact et les couches suivantes ayant des épaisseurs et/ou des rigidités de plus en plus décroissantes.

8. Composite selon la revendication 1, **caractérisé en ce que** des tissus de fibres (7.3) avec un haut module d'élasticité, une résistance à la traction élevée et une forte dilatation linéaire sont fournis entre les couches céramiques (5.1.1 à 5.1.n), lesdits tissus de fibres (7.3) étant incorporés dans les couches élastomères (5.2).

9. Composite selon la revendication 1, **caractérisé en ce qu'**au moins une résine thermodurcissable est appliquée à l'au moins un tissu de support (5.3) et/ou aux couches élastomères (5.2), auxdites au moins deux couches céramiques (5.1.1 à 5.1.n) et/ou au corps élastomère, lesdites résines thermodurcissables étant une résine époxyde, une résine de polyester, une résine d'acrylate, une résine de phénol-formaldéhyde et/ou une résine d'ester de cyanate.

10. Composite selon la revendication 1, **caractérisé en ce que** l'au moins une couche de matériau tissulaire, tel que de la fibre de carbone, de la fibre de verre, etc., et une résine synthétique partiellement thermodurcissable sont fournies dans le corps d'absorption/dissipation (5.2, 5.3).

11. Composite selon la revendication 1, **caractérisé en ce que** chaque couche de céramique (5.1.1 à 5.1.n) est composée d'un agencement géométrique de carreaux céramiques.

12. Procédé de fabrication d'un composite multicouche résistant aux chocs et aux impacts selon l'une quelconque des revendications précédentes, **caractérisé par**
la préparation d'un corps de protection contre les éclats externes (5.5), d'au moins un corps actif (5.1.1 à 5.1.n, 5.2) et
d'au moins un corps d'absorption/dissipation (5.2, 5.3), et
le durcissement et/ou la prise dudit corps de protection contre les éclats externes (5.5) sur ledit au moins un corps actif (5.1.1 à 5.n, 5.2) et dudit au moins un corps actif (5.1.1 à 5.n, 5.2) sur ledit au moins un corps d'absorption/dissipation (5.2, 5.3).

13. Procédé selon la revendication 12, **caractérisé par**
L'obtention d'un moule à revêtement anti-adhérent,
Le chargement du moule avec des couches selon la séquence du corps de protection contre les éclats externes (5.5), de l'au moins un corps actif (5.1.1 à 5.n, 5.2) et de l'au moins un corps d'absorption/dissipation (5.2, 5.3),
la fermeture du moule, et
le durcissement et la prise simultanée dudit corps de protection contre les éclats externes (5.5) sur ledit au moins un corps actif (5.1.1 à 5.n, 5.2) et dudit au moins un corps actif (5.1.1 à 5.n, 5.2) sur ledit au moins un corps d'absorption/dissipation (5.2, 5.3) par application de pression et de température dans une presse à chaud.

14. Procédé selon la revendication 12, **caractérisé par**
L'obtention d'un moule à revêtement anti-adhérent,
Le chargement du moule avec des couches selon la séquence du corps de protection contre les éclats externes (5.5), de l'au moins un corps actif (5.1.1 à 5.n, 5.2) et de l'au moins un corps d'absorption/dissipation (5.2, 5.3), et
Le durcissement et la prise simultanée dudit corps de protection contre les éclats externes (5.5) sur ledit au moins un corps actif (5.1.1 à 5.n, 5.2) et dudit au moins un corps actif (5.1.1 à 5.n, 5.2) sur ledit au moins un corps d'absorption/dissipation (5.2, 5.3) par application d'une température supérieure à 110 °C dans un autoclave ou une étuve à air chaud.

15. Procédé selon la revendication 12, **caractérisé par**
Le revêtement du moule avec de la paraffine, une silicone, un tensioactif et/ou un hydrocarbure fluoré.
